# EUROPEAN PATENT SPECIFICATION

(11) **EP 1 692 599 B1**
(45) Date of publication and mention of the grant of the patent: **17.07.2013**
(21) Application number: 04813590.9
(22) Date of filing: 08.12.2004
(51) Int. Cl.: G06F 17/30, G06Q 40/00

(54) **EFFICIENT AGGREGATE SUMMARY VIEWS OF MASSIVE NUMBERS OF ITEMS IN HIGHLY CONCURRENT UPDATE ENVIRONMENTS**
EFFIZIENTE AGGREGAT-ZUSAMMENFASSUNGSANSICHTEN MASSIVER ANZAHLEN VON POSTEN IN HOCHPARALLELEN AKTUALISIERUNGS-UMGEBUNGEN
VUES DE DONNÉES AGRÉGÉES COMPRENANT UN GRAND NOMBRE D'ENTRÉES EFFICACES DANS DES ENVIRONMENTS COMPRENANT DES MISES A JOUR HAUTEMENT CONCURRENTES

(30) Priority: 08.12.2003 US 528971 P; 07.12.2004 US 7499
(43) Date of publication of application: 23.08.2006
(73) Proprietor: SAVI TECHNOLOGY, INC., Sunnyvale, CA CA 94089-1707 (US)
(72) Inventor: CHAI, Zong, Hua, Singapore 760213 (SG); ALCOCK, Andrew E. S., Singapore 547325 (SG)
(74) Representative: Round, Edward Mark
(86) International application number: PCT/US2004/041283
(87) International publication number: WO 2005/057371

(56) References cited:
- US-A- 5 794 241
- US-B1- 6 484 159
- MUMICK I S ET AL: "MAINTENANCE OF DATA CUBES AND SUMMARY TABLES IN A WAREHOUSE" ACM PROCEEDINGS OF SIGMOD. INTERNATIONAL CONFERENCE ON MANAGEMENT OF DATA, XX, XX, vol. 26, no. 2, 1 June 1997 (1997-06-01), pages 100-111, XP002074807
- LEE J W T ET AL: "Materialized view design and maintenance in a financial data warehouse system" SYSTEMS, MAN, AND CYBERNETICS, 1999. IEEE SMC '99 CONFERENCE PROCEEDIN GS. 1999 IEEE INTERNATIONAL CONFERENCE ON TOKYO, JAPAN 12-15 OCT. 1999, PISCATAWAY, NJ, USA,IEEE, US, vol. 5, 12 October 1999 (1999-10-12), pages 930-935, XP010362895 ISBN: 978-0-7803-5731-0

## Description

### FIELD OF THE INVENTION

The present invention relates to updates of information stored in a database, and more particularly, to highly concurrent updates of aggregate summary data.

### BACKGROUND

A standard database table maintains information about of a large set of uniquely identified items, one row corresponding to each item, with columns corresponding to various attributes of the items, and fields containing values of the attributes of the items. Attributes could include various information that may change over time.

When processing large numbers of items with frequent updates, typically both a large database table with one row for each item and a smaller table for aggregate summaries of the item data are used. Dealing with a high volume of transactions with this scheme causes no locking or conflict issues with the large asset table, but can be problematic for the smaller aggregate table.

One context in which such tables are used is management of asset changes, including asset movement, creation, and destruction. Information about assets in various locations is stored in the tables, which are frequently updated upon movement of the assets from place to place.

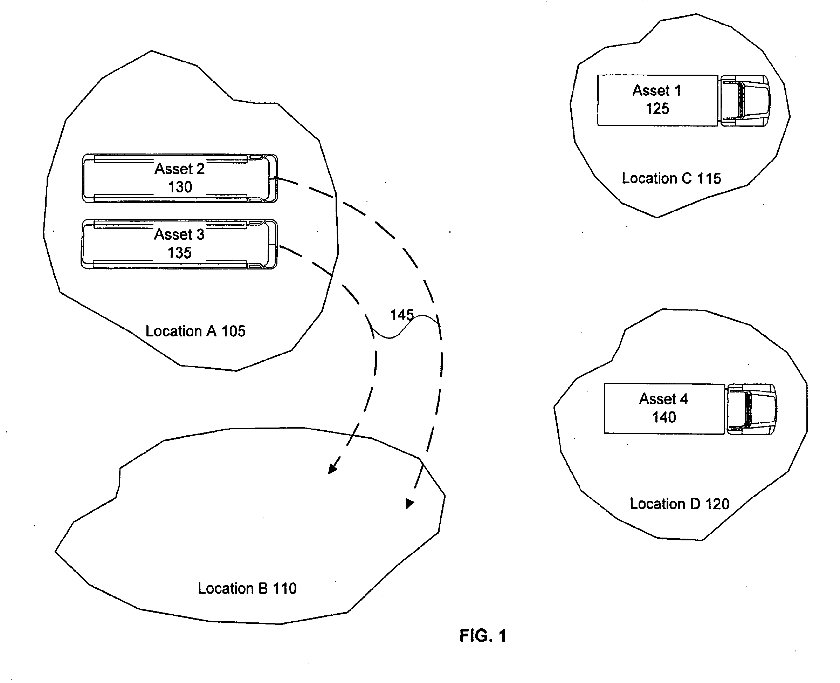

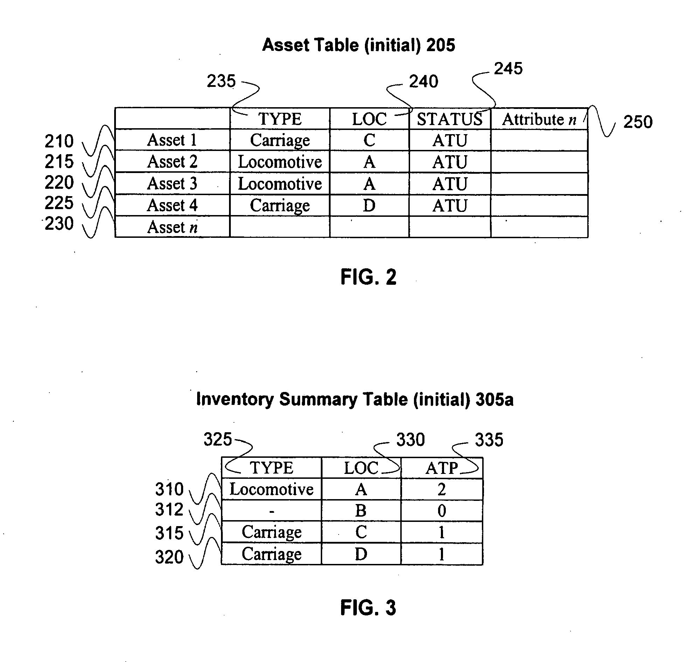

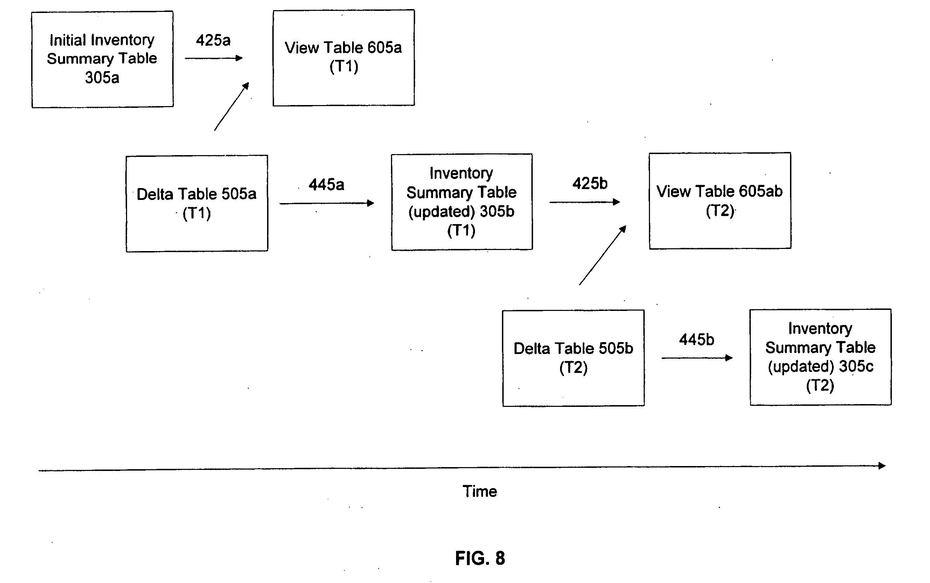

Referring now to FIG. 1, there is illustrated an example of assets at different locations in an asset management system 800 as depicted in FIG. 8. The example shows Locations A-D 105-120 including Assets 1-4 (125-140). Referring also now to FIG. 2, it shows an initial Asset Table 205. The Asset Table 205 data corresponds to the Assets 125-140 depicted in FIG. 1. The rows 210-225, respectively, correspond to the Assets 1-4 (125-140), and may include additional rows, e.g., 230, for greater numbers of assets. The columns 235-250 are for various attributes relating to the Assets 125-140. In this example, the attributes shown are Type 235, Location (Loc) 240, and Status 245, however, various other attributes 250 could be used depending on the business need. The types 235 listed in this example include Locomotive and Carriage. The type 235 generally describes a large container in this example, but could refer to other asset types, such as individual items or cartons, depending on business needs. The locations 240 (A, C, D) correspond to the locations of the respective assets 125-140 in FIG. 1. The status 245, shown as available to use (ATU) indicates that the asset is intact and available. All of the assets in this example are in available to use status to simplify the example, however, assets could also have a different status 245, for example, damaged, for assets damaged in transit.

In a simple asset management system 100 for updates to such tables, each message or update is about a unique "atom" or object. Thus, the transaction processing a single message needs to lock only the single object that the message refers to. However, for a system managing a large number of assets with various attributes, a message may be about an asset, but the asset may be related (possibly by containment or a physical linkage) to other assets; those assets that are related to one other are known as "an aggregation." An aggregate summary may contain several transactions and may correspond to one or more threads. For example, Assets 2 (130) and 3 (135) are assets that can form an aggregate summary, as the data displayed in FIG. 2 indicates that these assets are related to each other because they share the same location (A), type (Locomotive), and status (ATU). While it is not necessary that assets share all attributes to be part of an aggregate summary, in this example they must share at least the same location.

Aggregate summaries are groups of items characterized by common attribute-value combinations. For example, the number of items available-to-promise at each location. In applications in which such aggregate summaries must be queried frequently over large number of items satisfying the aggregate criteria, it is inefficient to re-compute the aggregate summary each time, even with appropriate database indexes on the attributes.

Referring now to FIG. 3, there is shown an inventory summary table 305a. The term summary table, as used herein, refers to any table that includes aggregate data. An initial Inventory Summary Table 305a summarizes the aggregate summary information from FIG. 2. For example, in FIG. 2 Assets 2 and 3 are both of the type locomotive, are at location A, and are available to use. Thus, in the Inventory Summary Table 305a these assets 215, 220 are grouped (or aggregated) by their common attributes, in this example, into a single row 310. Note that the columns in the Inventory Summary Table 305a are similar to FIG. 2, including Type 325 and Loc 330, however, the third column 335 represents available-to-promise (ATP) assets (e.g., number of assets having any available status). In this example, only a few rows and columns are shown for clarity, however, each such table 305 may have multiple rows and columns as appropriate for the business need and data contained therein.

Conceptually, therefore, messages about different assets may in fact be messages about the same aggregate summary. Locking and ordering within the system must take these aggregations into account to prevent data integrity failures.

One prior art solution to this problem is to maintain a separate aggregate summary table, such as the Inventory Summary Table 305a of FIG. 3, by incremental atomic transaction updates to the attributes of the individual items. For example, if an available-to-promise item, e.g., Asset 2 (130), at a first location, e.g., Location A, is moved to another location, e.g., Location B, in addition to the update of each individual item's location, the aggregate available-to-promise summaries corresponding to the old and new locations respectively are decremented and incremented to account for the change. In this example, row 215 of the Asset Table 205 would reflect a change in the Loc column 240 from A to B. In addition, row 310 of the Inventory Summary Table 305a would change to reflect 1 asset in the ATP column 335, and a new row would be added to reflect the new location (B).

In environments in which the concurrency of item attribute update is low this scheme is effective in supporting highly frequent queries of such aggregate summaries. However, to process a very large number of updates per second, such as with concurrent movement ot assets, the updates are processed in many concurrent threads. A thread executes a series of sequential transactions, for example transactions in an aggregation. A transaction corresponds to movement, in this example, of a single asset. When separate threads are processing information concurrently, it becomes critical to ensure that no two threads attempt to update the same data record at the same time; if this condition occurs, the data will almost certainly become corrupt causing the system to behave incorrectly. The general approach to resolving the concurrent update problem is for each transaction to lock the rows it needs to update for the duration of the transaction. Locking may take the form of pessimistic or optimistic locking.

In pessimistic locking, a transaction locking a row locks out access to that row to all other transactions that want to read, modify, or lock that row. All other transactions wanting to access the row in any way must wait until the transaction that owns the lock releases it. This scheme can lead to a state known as "deadlock." Consider an example in which a first transaction needs rows 1 & 2, and a second transaction needs rows 1 & 2. If the first transaction gets a lock on row 1 and the second transaction gets a lock on row 2, both transactions will wait indefinitely for the row each transaction is missing. Avoiding this sort of deadlock in a pessimistic locking scheme requires complicated, custom, hard-to-debug code in a system. One known approach is to ensure that threads always take out locks on rows in the same order. However, in a message driven system, doing so can be difficult if not impossible when there exist complex, dynamic relationships between the objects that need to be locked. In addition, pessimistic locking reduces system throughput when many transactions are queued up waiting for a lock on the same row.

In optimistic locking, many transactions can have a lock on the same row at once, on the theory that potential problems are detected when updates are issued to the database. This process is implemented by logic to detect when a row with a lock on it has changed. At this stage in the transaction, one can back out of the transaction and restart it. In a system in which conflict for rows is low, this process will maximize throughput. However, whenever there is a concurrent update to an optimistic locking system, all but one transaction is guaranteed to fail. Failure can be expensive, especially in terms of CPU and resource cost. Not only does each failed transaction have to roll back all the updates that it made up to backing out, which is typically several times the cost of making the update, but the transaction also has to be performed for a second time.

Thus, highly concurrent updates of item attributes within extended transactions cannot be supported well by either a pessimistic or optimistic locking scheme. For example, in the available-to-promise at location application, many transactions may be of the form of an available-to-promise sufficiency check query, followed by an update items to promised status, followed by consequential business logic updates based on the available-to-promise end results. Such transactions will take write locks on the aggregate summary table very early leading to poor concurrency.

Concurrency issues are exacerbated when aggregate summary updates are double-entry as in the available-to-promise at location aggregate summary example. This issue potentially leads to transaction contention chains on the aggregate summary table, which can close resulting in deadlocks.

Referring again to FIGS. 1-3, the concurrent movement 145 of Asset 2 (130) and Asset 3 (135) from Location A 105 to Location B 110 would cause a single change in each of rows 215 and 220 of the initial Asset Table 205 of FIG. 2, from Location A to Location B. In addition, the change would cause at least two changes to the initial Inventory Summary Table 305a of FIG. 3. For example, row 310 currently indicates that two ATP Locomotives are at Location A. Thus, moving one of the two assets would cause row 310 to change to one available to promise Locomotive at Location A and cause row 312 to change to one available to promise Locomotive at Location B. A similar change would be required for the second asset. Because the asset movement for each asset affects the same rows in the Inventory Summary Table 305a, the movement could cause possible conflicts between locks on the rows needed for each change. Using this simple example of just two assets moving concurrently, it is easy to see how concurrent movement of many assets to and from various locations, as is common in large shipments of assets, could cause major locking conflicts and likely deadlocks.

In addition, some business logic is dependent on accurate post-update data. For example, as a transaction processes, certain business logic may look to the data update in progress to for changes in the aggregate summary data, for example, for purposes of determining changes in the status of assets in route from what has been promised. Thus, the above locking schemes fail to accommodate such business logic because the transaction must complete before any data is available.
Mumick, I. S. et al., "Maintenance of Data Cubes and Summary Tables in a Warehouse," Proc. ACM SIGMOD International Conference on Management of Data, vol. 26, no. 2, pp. 100-111, June 1997, propose a method of maintaining aggregate views (the summary-delta table method), and use it to solve two problems in maintaining summary tables in a warehouse: (1) how to efficiently maintain a summary table while minimizing the batch window needed for maintenance, and (2) how to maintain a large set of summary tables defined over the same base tables.
Lee, J.W.T. et al, "Materialized view design and maintenance in a financial data warehouse system," IEEE SMC'99 Conference Proceedings, Tokyo, Oct. 1999, vol. 5, pp. 930-935, 12 October 1999, describes an implementation which makes use of the auxiliary view technique and the summary-delta table method in a single system: a Financial Data Warehouse System (FDWS), as a hybrid approach to view maintenance. Such an approach applies the two techniques as complements to each other and takes into account the special characteristics of the data warehouse concerned.
US6484159 describes a method and system for incrementally maintaining a database having at least one materialized view based on at least one table. When changes to the table are received, a change table based on the received changes is generated. The generated change table is propagated upwards to form a higher-level change table and the materialized view is updated by applying the higher-level change table to the materialized view using a refresh operation.

### SUMMARY OF THE INVENTION

In accordance with one aspect of the present invention, there is provided a method of - updating concurrent aggregate summaries, comprising in response to receiving, upon initiation of a first transaction, a request to apply an update to data in a summary table, applying the request to a delta table, the summary table comprising aggregate data and the delta table comprising data about changes intended for the summary table; maintaining the data in the summary table for processing by a second transaction at least in part concurrent with the first transaction; consolidating the summary and delta tables to create a view table for processing by the first transaction, the view table comprising view data reflecting a future view of the data in the summary table after the update has been applied to the summary table; and prior to commit of the first transaction: applying the update received upon initiation of the first transaction to the data in the summary table using the delta table; and deleting the update from the delta table.

In accordance with another aspect of the present invention, there is provided a system for updating concurrent aggregate summaries, comprising a business engine for in response to receiving, upon initiation of a first transaction, a request to apply an update to data in a summary table, applying the request to a delta table, the summary table comprising aggregate data and the delta table comprising data about changes Intended for the summary table; a database for maintaining the data in the summary table for processing by a second transaction at least in part concurrent with the first transaction; a transaction manager for consolidating the summary and delta tables to create a view table for processing by the first transaction, the view table comprising view data reflecting a future view of the data In the summary table after the update has been applied to the summary table; an inventory module for, prior to commit of the first transaction, applying the update received upon initiation of the first transaction to the data in the summary table using the delta table, wherein the transaction manager (825) further is configured for initiating commit of the first transaction and deleting the update from the delta table.

This process bypasses the above-described locking issue entirely by separating updates to the summary table as inserts to another table. Because this process is not functionally equivalent to updating rows on a database, the problems associated with prior art methods are reduced or eliminated. By placing the ultimate update late in the transaction timeline and locking rows in a predetermined sequential order, the duration of any write locks on the inventory summary table is minimized, thus maximizing concurrency, improving throughput, and avoiding deadlocks.

### BRIEF DESCRIPTION OF THE DRAWINGS

FIG. 1 is a schematic diagram illustrating an example of assets at different locations in an asset management system.
FIG. 2 is an initial asset table including data from the schematic of FIG. 1.
FIG. 3 is an inventory summary table including aggregate data from the initial asset table of FIG. 2.

FIG. 4 is a flow chart illustrating a method of updating highly concurrent aggregate summaries according to one embodiment of the present invention.

FIGS. 5A & 5B are delta tables including changes intended for an inventory summary table according to one embodiment of the present invention.

FIGS. 6A & 6B are view tables including information from a consolidation of an inventory summary table and a delta table according to one embodiment of the present invention.

FIGS. 7A & 7B are updated inventory summary tables according to one embodiment of the present invention.

FIG. 8 is a flow diagram illustrating an example of a method of updating highly concurrent aggregate summaries according to one embodiment of the present invention.

FIG. 9 is a block diagram illustrating a system for updating highly concurrent aggregate summaries according to one embodiment of the present invention.

### DETAILED DESCRIPTION OF THE EMBODIMENTS

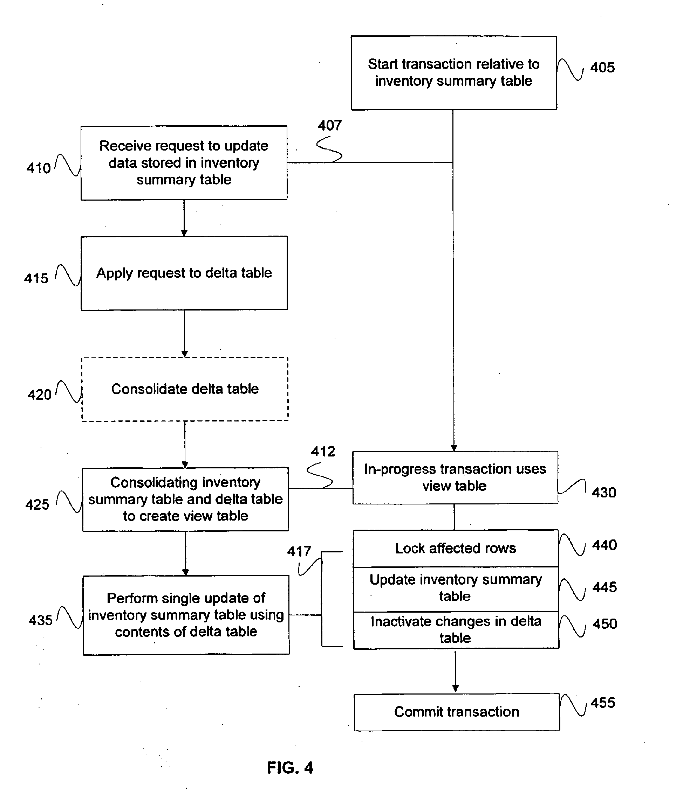

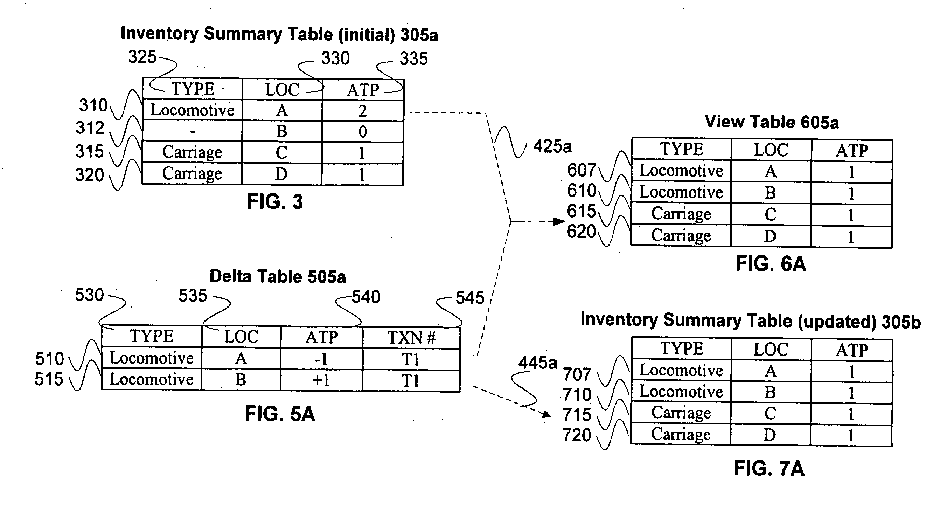

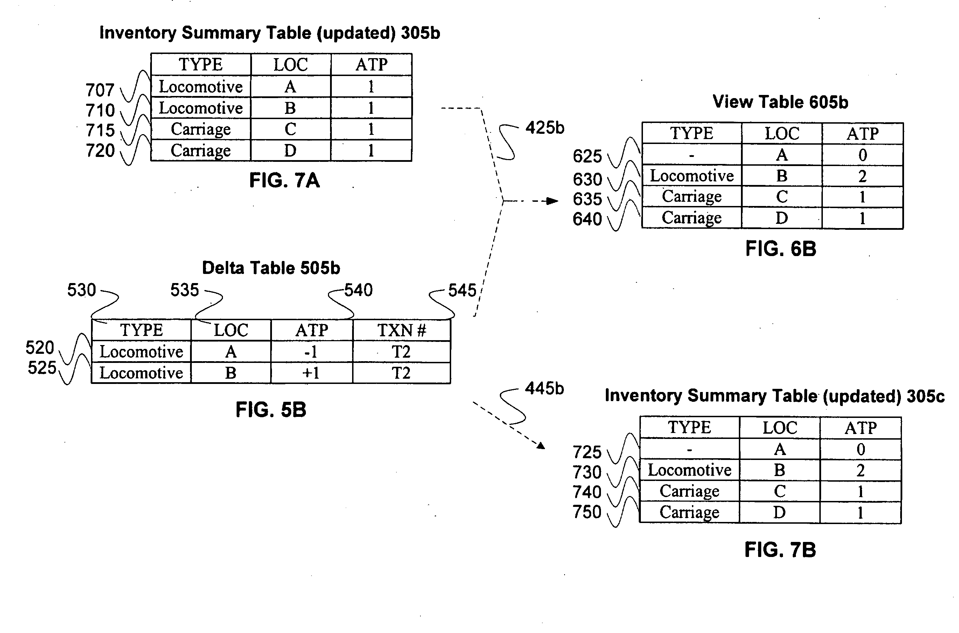

Referring now to FIG. 4, there is shown a flow chart illustrating a method of updating highly concurrent aggregate summaries according to one embodiment of the present invention. Note that the right side of the figure 405, 430, 440-455 corresponds to actions taken by a single transaction in progress, the left side of the figure 410-425, 435 corresponds to actions taken by a system, for example system 800 of FIG. 8, for updating highly concurrent aggregate summaries, and the dotted lines 407, 412, 417 connecting the two sides indicate alignment between the timing of the respective actions by the transaction and system. To begin the process, a transaction initiates 405 relative to an inventory summary table, e.g., 305a, to update data stored in the inventory summary table stored in a database, e.g., Database 810 of FIG 8. Once the transaction request is received 410 by the system, it applies 415 the request instead to a temporary delta table, e.g., Temporary Delta Table 505a of FIG. 5A, stored in the database or in memory (not shown). The delta table is a staging table containing only the changes (or deltas) intended for the inventory summary table, e.g., 305a, and may contain multiple rows incrementing or decrementing values for each row in the inventory summary table. The delta table is specific to, and cleared at the end of, each transaction. Thus, transactions need not have access to delta tables other than their own. In addition, because the delta table rows will be deleted, removed, or otherwise inactivated before the transaction commits, no later-occurring transactions can see the rows in the delta table for previous transactions. In some embodiments, the information in the delta table is consolidated 420 before moving forward. For example, if several separate changes affecting a single attribute are contained in the delta table in different rows, those rows first are consolidated into a single row. In other words, if Row 1 reduced the number of ATP Locomotives at Location X by 5, Row 2 increased the number of Locomotives at Location X by 2, and Row 3 reduced the number of ATP Locomotives at Location X by 1, these three rows would be consolidated to a single row indicating that ATP Locomotives at Location X had been reduced by 4 (-5 (Row1) + 2 (Row 2) - 1 (Row 3) = -4).

Next, the inventory summary and delta tables, e.g., 305a & 505a, are consolidated to create 425 a view table, e.g., 605a, in the database. The view table is a logical construct that is stable and always is used 430 by the in-process transaction (rather than the inventory summary table). The data in the view table is inaccurate at this point with respect to what is contained in the inventory summary table because the transaction has not yet committed 455. However, the view table is an accurate in-progress summary useful for the transaction, e.g., in step 430. As a result, if the view table indicates that inventory level has dropped below the level required, system alerts may be issued at this stage, triggering other business processes. As a result, the view table can be thought of as an in-the-future view with respect to what data will exist in the inventory summary table following the transaction commit. Thus, other transactions processing at about the same time as the in-process transaction see the (accurate) information in the inventory summary table rather than the view table.

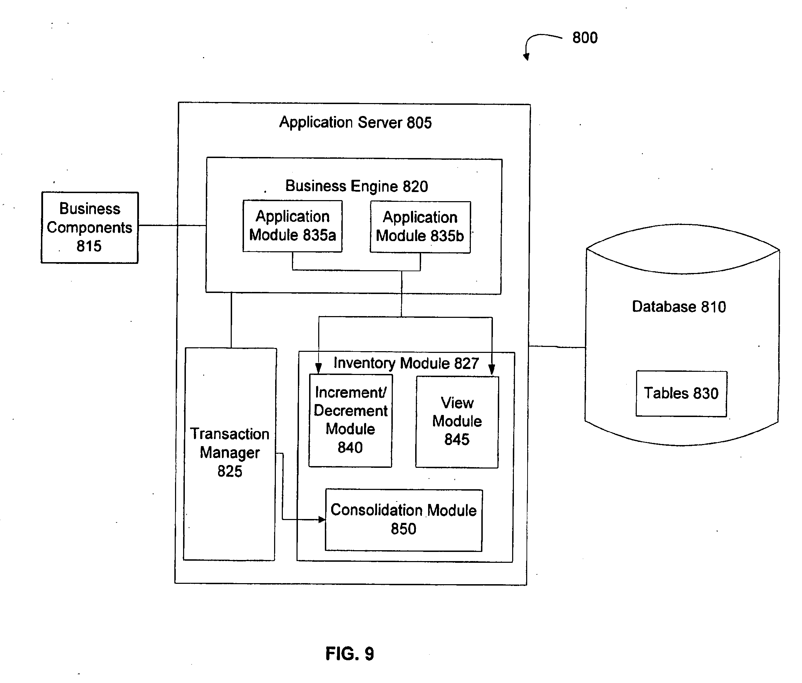

Just before the transaction commit 455, the system performs a single consolidated update 435 of the inventory summary table using the contents of the delta table. As part of this update, the transaction first locks 440 the row(s) of the inventory summary table affected by the transaction. Next, the locked rows of the inventory summary table affected by the deltas are updated 445 with those changes. In one embodiment, the single update is a single Structured Query Language (SQL) statement, subgrouped by data that affects each row in the inventory summary table. Because the transaction manager 825 (of FIG. 9) limits row locking to near the end of the transaction, the row is locked for short period of time, compared to if the same lock was taken early in the transaction. Locks taken earlier in the transaction would require other transactions to wait, resulting in some of the locking issues discussed with respect to pessimistic and optimistic locking methods in the background section. In addition, locks on the inventory table are taken out in a specific, algorithmic order, guaranteeing that a deadlock cannot occur. Then, the deltas are inactivated 450 from the delta table prior to the transaction commit 455. In one embodiment, inactivation may include deletion or removal of rows. Because the view table is a logical construct, inactivation of the delta table rows concurrently inactivates or deletes the changes to the view table.

The single statement update of this method is advantageous over a traditional update when used for assert movement in terms of simplicity and efficiency; a traditional update would require two statements to update the inventory summary table: one to decrement the asset count at the sending location and one to increment the asset count at the receiving location. In addition, the placement of the update late in the transaction results in higher system throughput, while the view table allows the business logic to operate unaffected by transaction processing.

The above-described aspects of the invention are advantageous for use in asset management contexts, such as for asset movement, as detailed in the following example, as well as asset creation and destruction. In addition, the method is useful for maintaining realtime financial account balances in accounting systems dealing with high-volume line-item amounts, as well as in other applications.

The following is an example of one embodiment of the method of FIG. 4, with reference again to the simple movement 145 of Assets 2 (130) and 3 (135) from Location A 105 to Location B 110 as depicted in FIG. 1. Once a transaction request for Asset 2 (Transaction 1) is received 410 by the system, it applies 415 the request to a temporary delta table in the database instead of the initial Inventory Summary Table 305a. Referring also now to FIG. 5A, it shows an example of a Delta Table 505a according to this example. The Delta Table 505a includes one row for each change (510-515), and columns for the type of asset involved in the change (530), the location (LOC) of the asset (535), the change in ATP assets (540), and for which transaction the change applies (545). Thus, in this example, the Delta Table 505a contains two rows 510-515: one row representing the decrement of ATP by one asset for Assets 2 at Location A (510) and one row representing the increment of ATP by one asset for Assets 2 at Location B (515).

Next, the Inventory Summary 305a and Delta 505a Tables are consolidated to create 425a a View Table 605a in the database, e.g., 810 of FIG. 9. Referring now also to FIG. 6a, a View Table 605a contains the information from the initial Inventory Summary Table 305a updated 425a to include the Delta Table 505a information. Continuing with the example, the View Table 605a includes four rows 607-620. Note that rows 615 and 620 have not changed from the initial Inventory Summary Table 305a. However, row 607 now shows that one locomotive type asset is available at Location A and row 610 now shows that one locomotive type asset is available at Location B.

As a final step before the transaction commit 455, the system performs a single consolidated update 435 of the Inventory Summary Table 305a using the contents of the Delta Table 505a. As part of this update, the transaction first locks 440 the row(s) of the inventory summary table 305a affected, in this example row 310 of FIG. 3. Next, the locked rows are updated 445a with those changes. The result is the updated Inventory Summary Table 305b, shown as FIG. 7A. Initial Inventory Summary Table 305a and updated Inventory Summary Table 305b represent instances of data contained in the Inventory Summary Table 305 at two different points in time. Note that the content of the updated Inventory Summary Table 305b is identical to that of the View Table 605a. Then, the changes are inactivated 450 (or deleted) from the Delta Table 505a (and thus from View Table 605a) prior to the transaction commit 455.

This process then repeats for Asset 3 (Transaction 2), as shown in FIGS. 7A, 5B, 6B, and 7B. Referring now to FIG. 8, it summarizes the process of FIGS. 3A-7B, showing the simple movement 145 of Assets 2 (130, T1) and 3 (135, T2) from Location A 105 to Location B 110 as depicted in FIG. 1. Briefly, the Initial Inventory Summary Table 305a and Delta Table 505a merge 425a to form View Table 605a. Then, prior to the transaction (T1) commit, the Inventory Summary Table is updated 445a with the data from Delta Table 505a to create updated Inventory Summary Table 305b. Next, the (now updated) Inventory Summary Table 305b and Delta Table 505b merge 425b to form View Table 605b. Then, prior to the transaction (T2) commit, the Inventory Summary Table is updated 445b with the data from Delta Table 505b to create updated Inventory Summary Table 305c.

Note that the ordering here of Transaction 1 and 2 is arbitrary. The first transaction to commit gets first priority; thus the transaction ordering may be considered "accidental."

Referring now to FIG. 9, it shows a block diagram illustrating a system for updating highly concurrent aggregate summaries according to one embodiment for implementing the present invention. The system includes an application server 805 attached to a database 810; the application server also may be attached to various business components 815. The application server 805 controls data updates, for example as described in the above method, and may be any application server that interacts between various business components 815 and a database 810. In one embodiment, the application server 805 is a Weblogic J2EE application server implemented by BEA. The database 810 may be any data repository that persists data in tables 830. In one example, the database 810 is an Oracle 9i relational database. In one example, the tables 830 include the various types of tables described herein (205, 305, 505, 605). The business components 815 may be various components that transmit or receive data to/from the business engine 820. In one embodiment in which the system monitors updates to asset movement using RFID tags, one of the components 815 is an RFID tag reader.

The application server 805 further comprises a business engine 820, a transaction manager 825, and an inventory module 827. The business engine 820 receives messages to move assets, create assets, dispose of assets or change assets' properties and states from the various business components 815. The business engine 820 communicates with the transaction module 825 and inventory module 827 to execute transactions to adjust tables 830, for example in response to movement, creation, or destruction of assets.

The business engine 820 further includes one or more application modules 835. The application modules 835 check the inventory position by sending instructions to the view module 845 of the inventory module 827, then modify asset information in the tables 830 in response to changes in asset state and send instructions to the increment/decrement module 840 of the inventory module 827. In one embodiment, the invention requires at least two application modules 835 because changes in asset state take at least two forms, for example, movement and change of status type. The delta table may be one of the tables 830 or may be stored in memory (not shown). After the application modules 835 have been executed, the business engine 820 instructs the transaction manager 825 to commit the transaction. This causes the consolidation of the inventory delta and inventory tables to occur as late as possible in the transaction. The transaction manager 825 interacts with the consolidation module 850 of inventory module 827, and database 810 to process updates to the tables 830. Specifically, the transaction manager 825 delegates the consolidation function to the consolidation module 850 of the inventory module 827.

The inventory module 827 controls the inventory positions of assets. The inventory module 827 further includes an increment/decrement module 840, a view module 845, and a consolidation module 850. The increment/decrement module 840 acts to increase and decrease the inventory positions of assets in the tables 830. The view module 845 understands the view table and provides access to the view table for the transaction in progress. The consolidation module 850, in response to delegation form the transaction manager, consolidates data contained in the delta table into the inventory summary tables at or towards the end of the transaction. The consolidation module 850 performs the inventory summary table update using the data from the delta table. Specifically, the consolidation module 850 facilitates the locking of rows to be updated, updates the information in the inventory summary table, and inactivates or deletes the changes to the delta table. At the end of these steps, the transaction manager 825 to commits the transaction to the database 810.

Finally, it should be noted that the language used in the specification has been principally selected for readability and instructional purposes, and may not have been selected to delineate or circumscribe the inventive subject matter. Accordingly, the disclosure of the present invention is intended to be illustrative, but not limiting, of the scope of the invention, which is set forth in the following claims.

## Claims

1. A method of updating concurrent aggregate summaries, comprising:
in response to receiving (410), upon initiation (405) of a first transaction (T1), a request to apply an update to data in a summary table, applying (415) the request to a delta table, the summary table comprising aggregate data and the delta table comprising data about changes intended for the summary table;
maintaining the data in the summary table for processing by a second transaction (T2) at least in part concurrent with the first transaction (T1);
consolidating (425, 425a) the summary and delta tables to create a view table for processing by the first transaction, the view table comprising view data reflecting a future view of the data in the summary table after the update has been applied to the summary table; and
prior to commit of the first transaction (T1):
applying (435, 445a) the update received upon initiation of the first transaction (T1) to the data in the summary table using the delta table; and
deleting the update from the delta table.

2. The method of claim 1, wherein the first transaction is in response to a change in the state of an asset and the data is associated with the asset.

3. The method of claim 1, wherein applying (435) the update of the summary table further comprises:
locking (440) rows of the summary table associated with the transaction; and
updating (445) the locked rows of the summary table using the update applied to the summary table.

4. The method of claim 1, wherein deleting the update from the delta table comprises deleting (450) rows of the delta table associated with the update.

5. The method of claim 1, wherein the business logic associated with the first transaction depends on post-update data.

6. The method of claim 1, wherein applying the update to the data in the summary table happens at a last step in the first transaction.

7. The method of claim 1, wherein applying the update to the summary table comprises issuing a single SQL statement.

8. A system (800) for updating concurrent aggregate summaries, comprising:
a business engine (820) for in response to receiving, upon initiation of a first transaction, a request to apply an update to data in a summary table (305a), applying the request to a delta table (505a), the summary table comprising aggregate data and the delta table comprising data about changes intended for the summary table;
a database (810) for maintaining the data in the summary table for processing by a second transaction at least in part concurrent with the first transaction;
a transaction manager (825) for consolidating the summary and delta tables to create a view table (605a) for processing by the first transaction, the view table comprising view data reflecting a future view of the data in the summary table after the update has been applied to the summary table;
an inventory module (827) for, prior to commit of the first transaction, applying the update received upon initiation of the first transaction to the data in the summary table using the delta table,
wherein the transaction manager (825) further is configured for initiating commit of the first transaction and deleting the update from the delta table.

9. The system of claim 8, the consolidation module (850) further configured for:
locking rows of the summary table associated with the transaction; and
updating the locked rows of the summary table using the update applied to the summary table.

10. A carrier medium carrying computer readable code for controlling a computer to carry out the method of any one of claims 1 to 7.

## Patentansprüche

1. Verfahren zum Aktualisieren von parallelen Summenzusammenfassungen, das Folgendes beinhaltet:
Anwenden (415), als Reaktion auf den Empfang (410), bei dem Einleiten (405) einer ersten Transaction (T1), einer Anforderung zum Anwenden eines Update auf Daten in einer Zusammenfassungstabelle, dieser Anforderung auf eine Delta-Tabelle, wobei die Zusammenfassungstabelle Summendaten umfasst und die Delta-Tabelle Daten über für die Zusammenfassungstabelle beabsichtigte Änderungen umfasst;
Führen der Daten in der Zusammenfassungstabelle zur Verarbeitung durch eine zweite Transaktion (T2) wenigstens teilweise parallel zu der ersten Transaktion (T1);
Konsolidieren (425, 425a) der Zusammenfassungs- und Delta-Tabellen zum Erzeugen einer Ansichtstabelle zur Verarbeitung durch die erste Transaktion, wobei die Ansichtstabelle Ansichtsdaten umfasst, die eine zukünftige Ansicht der Daten in der Zusammenfassungstabelle nach dem Anwenden des Update auf die Zusammenfassungstabelle reflektieren; und
vor dem Commit der ersten Transaktion (T1):
Anwenden (435, 445a) des nach dem Einleiten der ersten Transaktion (T1) empfangenen Update auf die Daten in der Zusammenfassungstabelle anhand der Delta-Tabelle; und
Löschen des Update aus der Delta-Tabelle.

2. Verfahren nach Anspruch 1, wobei die erste Transaktion als Reaktion auf eine Änderung des Zustands eines Asset erfolgt und die Daten mit dem Asset assoziiert sind.

3. Verfahren nach Anspruch 1, wobei das Anwenden (435) des Update der Zusammenfassungstabelle ferner Folgendes beinhaltet:
Sperren (440) von mit der Transaktion assoziierten Reihen der Zusammenfassungstabelle; und
Aktualisieren (445) der gesperrten Reihen der Zusammenfassungstabelle mit den auf die Zusammenfassungstabelle angewandten Updates.

4. Verfahren nach Anspruch 1, wobei das Löschen des Update aus der Delta-Tabelle das Löschen (450) von mit dem Update assoziierten Reihen der Delta-Tabelle beinhaltet.

5. Verfahren nach Anspruch 1, wobei die mit der ersten Transaktion assoziierte Geschäftslogik von Post-Update-Daten abhängig ist.

6. Verfahren nach Anspruch 1, wobei das Anwenden des Update auf die Daten in der Zusammenfassungstabelle in einem letzten Schritt in der ersten Transaktion erfolgt.

7. Verfahren nach Anspruch 1, wobei das Anwenden des Update auf die Zusammenfassungstabelle das Ausgeben eines einzigen SQL-Statement beinhaltet.

8. System (800) zum Aktualisieren von parallelen Summenzusammenfassungen, das Folgendes umfasst:
eine Business-Engine (820) zum Anwenden, als Reaktion auf den Empfang, nach dem Einleiten einer ersten Transkation, einer Anforderung zum Anwenden eines Update auf Daten in einer Zusammenfassungstabelle (305a), dieser Anforderung auf eine Delta-Tabelle (505a), wobei die Zusammenfassungstabelle Summendaten umfasst und die Delta-Tabelle Daten über für die Zusammenfassungstabelle beabsichtigte Änderungen umfasst;
eine Datenbank (810) zum Führen der Daten in der Zusammenfassungstabelle zur Verarbeitung durch eine zweite Transaktion wenigstens teilweise parallel zu der ersten Transaktion;
einen Transaktionsmanager (825) zum Konsolidieren der Zusammenfassungs- und Delta-Tabellen zum Erzeugen einer Ansichtstabelle (605a) zur Verarbeitung durch die erste Transaktion, wobei die Ansichtstabelle Ansichtsdaten umfasst, die eine zukünftige Ansicht der Daten in der Zusammenfassungstabelle nach dem Anwenden des Update auf die Zusammenfassungstabelle reflektieren;
ein Inventarmodul (827) zum Anwenden, vor dem Commit der ersten Transaktion, des nach dem Einleiten der ersten Transkation empfangenen Update auf die Daten in der Zusammenfassungstabelle mittels der Delta-Tabelle,
wobei der Transaktionsmanager (825) ferner zum Einleiten eines Commit der ersten Transkation und zum Löschen des Update aus der Delta-Tabelle konfiguriert ist.

9. System nach Anspruch 8, wobei das Konsolidierungsmodul (850) ferner konfiguriert ist zum:
Sperren von mit der Transaktion assoziierten Reihen der Zusammenfassungstabelle; und
Aktualisieren der gesperrten Reihen der Zusammenfassungstabelle mit den auf die Zusammenfassungstabelle angewandten Updates.

10. Trägermedium, das rechnerlesbaren Code zum Steuern eines Computers zum Ausführen des Verfahrens nach einem der Ansprüche 1 bis 7 trägt.

## Revendications

1. Procédé de mise à jour de récapitulatifs agrégés simultanés, consistant à :
en réponse à la réception (410), lors de l'initiation (405) d'une première transaction (T1), d'une demande visant à appliquer une mise à jour à des données dans une table récapitulative, appliquer (415) la demande à une table différentielle, la table récapitulative comprenant des données agrégées et la table différentielle comportant des données connexes à des modifications destinées à la table récapitulative ;
conserver les données dans la table récapitulative en vue d'un traitement par une seconde transaction (T2), au moins en partie simultanée à la première transaction (T1) ;
consolider (425, 425a) la table récapitulative et la table différentielle en vue de créer une table de vues destinée à un traitement par la première transaction, la table de vues comprenant des données de vues reflétant une vue future des données dans la table récapitulative dès lors que la mise à jour a été appliquée à la table récapitulative ; et
préalablement à l'archivage de la première transaction (T1) :
appliquer (435, 445a) la mise à jour reçue lors de l'initiation de la première transaction (T1) aux données dans la table récapitulative, en utilisant la table différentielle ; et
supprimer la mise à jour de la table différentielle.

2. Procédé selon la revendication 1, dans lequel la première transaction est en réponse à une modification de l'état d'un actif, et les données sont associées à l'actif.

3. Procédé selon la revendication 1, dans lequel l'application (435) de la mise à jour de la table récapitulative consiste en outre à :
verrouiller (440) des lignes de la table récapitulative associées à la transaction ; et
mettre à jour (445) les lignes verrouillées de la table récapitulative en utilisant la mise à jour appliquée à la table récapitulative.

4. Procédé selon la revendication 1, dans lequel la suppression de la mise à jour de la table différentielle consiste à supprimer (450) des lignes de la table différentielle associées à la mise à jour.

5. Procédé selon la revendication 1, dans lequel la logique de gestion associée à la première transaction dépend de données de post-actualisation.

6. Procédé selon la revendication 1, dans lequel l'application de la mise à jour aux données dans la table récapitulative est mise en oeuvre lors d'une dernière étape de la première transaction.

7. Procédé selon la revendication 1, dans lequel l'application de la mise à jour à la table récapitulative comprend l'émission d'un énoncé SQL unique.

8. Système (800) destiné à mettre à jour des récapitulatifs agrégés simultanés, comprenant :
un moteur de gestion (820) pour, en réponse à la réception, lors de l'initiation d'une première transaction, d'une demande visant à appliquer une mise à jour à des données dans une table récapitulative (305a), appliquer la demande à une table différentielle (505a), la table récapitulative comprenant des données agrégées et la table différentielle comportant des données connexes à des modifications destinées à la table récapitulative ;
une base de données (810) destinée à conserver les données dans la table récapitulative en vue d'un traitement par une seconde transaction, au moins en partie simultanée à la première transaction ;
un gestionnaire de transactions (825) destiné à consolider la table récapitulative et la table différentielle en vue de créer une table de vues (605a) destinée à un traitement par la première transaction, la table de vues comprenant des données de vues reflétant une vue future des données dans la table récapitulative dès lors que la mise à jour a été appliquée à la table récapitulative ;
un module d'inventaire (827) destiné à, préalablement à l'archivage de la première transaction, appliquer la mise à jour reçue lors de l'initiation de la première transaction aux données dans la table récapitulative, en utilisant la table différentielle ;
dans lequel le gestionnaire de transactions (825) est en outre configuré de manière à initier l'archivage de la première transaction et à supprimer la mise à jour de la table différentielle.

9. Système selon la revendication 8, dans lequel le module de consolidation (850) est en outre configuré de manière à ;
verrouiller des lignes de la table récapitulative associées à la transaction ; et
mettre à jour les lignes verrouillées de la table récapitulative en utilisant la mise à jour appliquée à la table récapitulative.

10. Support porteur contenant un code lisible par ordinateur en vue de commander à un ordinateur de mettre en oeuvre le procédé selon l'une quelconque des revendications 1 à 7.
